# EUROPÄISCHE PATENTSCHRIFT

(11) **EP 2 390 493 B1**
(45) Veröffentlichungstag und Bekanntmachung des Hinweises auf die Patenterteilung: **26.06.2019**
(21) Anmeldenummer: 11165678.1
(22) Anmeldetag: 11.05.2011
(51) Int. Cl.: F02N 15/00

(54) **Startermotor in einem Starter für eine Brennkraftmaschine**
Starter motor in a starter for a combustion engine
Moteur électrique dans un démarreur pour un moteur à combustion interne

(30) Priorität: 11.05.2011 DE 102011075653; 25.05.2010 DE 102010029268
(43) Veröffentlichungstag der Anmeldung: 30.11.2011
(73) Patentinhaber: SEG Automotive Germany GmbH, 70499 Stuttgart (DE)
(72) Erfinder: Fein, Mathias, 74354, Besigheim-Ottmarsheim (DE)
(74) Vertreter: Steinbauer, Florian

(56) Entgegenhaltungen:
- EP-A1- 2 472 098
- DE-A1-102007 039 243
- DE-U1- 29 801 079
- FR-A1- 2 925 619
- GB-A- 394 841
- US-A- 4 932 273

## Beschreibung

Die Erfindung bezieht sich auf einen Startermotor in einem Starter für eine Brennkraftmaschine nach dem Oberbegriff des Anspruches 1.

### Stand der Technik

In der DE 32 16 448 A1 wird eine Andrehvorrichtung für Brennkraftmaschinen beschrieben, die eine Antriebswelle mit einem Antriebsritzel aufweist, wobei die Antriebswelle mit einem im Motorgehäuse drehbar gelagerten Anker verbunden ist. An einem stirnseitigen Ende der Antriebswelle befindet sich eine Ankerlängsspieleinstelleinrichtung mit einer axial verstellbaren Schraube, die stirnseitig an die Antriebswelle anstößt. Durch eine Verstellung der Schraube kann das Ankerlängsspiel der Antriebswelle beeinflusst werden.

Um das Ankerlängsspiel zu eliminieren, muss die Schraube der Einstelleinrichtung so weit eingedreht werden, dass auch während des Betriebs die Schraube und die Antriebswelle stirnseitig auf Kontakt aneinander liegen. Hierbei besteht die Gefahr einer erhöhten Reibung.

Aus der DE 298 01 079 U1 ist ein Startermotor bekannt, bei dem eine Antriebswelle in einem Lager, das wiederum in einem Lagerdeckel angeordnet ist, gelagert ist. Auf der Antriebswelle ist ein Kommutator vorgesehen. Auf die Antriebswelle ist eine Scheibe aufgebracht. Diese liegt einerseits an der Schulter des Lagerdeckels, und andererseits an der Bürstenplatte an, um so das Längsspiel zu begrenzen.

Die US 4 932 273 A beschreibt einen Startermotor, bei dem eine Antriebswelle in einem Lager gelagert ist. Die Antriebswelle wird mittels einer Blattfeder und einer Scheibe in axialer Richtung begrenzt. Hierdurch wird eine Kraft auf die Ankerwelle weg von einem Deckel, der das Lager schützt, und auch weg von einem Gehäusebauteil, in dem das Lager eingebracht ist, gedrückt.

Die DE 10 2007 039 243 A1 beschreibt einen Startermotor, bei dem eine Antriebswelle in einem Lager bzw. Lagerring gelagert ist. Die Antriebswelle wird mittels einer Ringfeder in axialer Richtung begrenzt. Hierdurch wird eine Kraft auf die Ankerwelle weg von dem Deckel bzw. der Schulter, die das Lager hält, gedrückt.

Aus der FR 2 925 619 A1 ist ein Startermotor bekannt, bei dem eine Art Feder an der Außenseite des Gehäuses an einer Lagerstelle einer Rotorwelle vorgesehen ist.

### Offenbarung der Erfindung

Der Erfindung liegt die Aufgabe zugrunde, einen Startermotor in einem Starter für eine Brennkraftmaschine mit einfachen Maßnahmen so auszubilden, dass das Axialspiel der Antriebswelle des Startermotors reduziert ist.

Diese Aufgabe wird erfindungsgemäß mit den Merkmalen des Anspruches 1 gelöst. Die Unteransprüche geben zweckmäßige Weiterbildungen an.

Der erfindungsgemäße Startermotor wird in einem Starter für eine Brennkraftmaschine eingesetzt. Bei dem elektrischen Startermotor handelt es sich beispielsweise um einen permanenterregten DC-Motor in der Ausführung als Innenläufermotor. Der Startermotor weist eine Antriebswelle auf, die in einem Gehäuse in Lagern drehbar aufgenommen ist. Um das axiale Spiel der Antriebswelle in den Lagern zu reduzieren oder gegebenenfalls vollständig zu eliminieren, ist eine die Antriebswelle beaufschlagende Längsspielausgleichseinrichtung vorgesehen, welche beim erfindungsgemäßen Startermotor ein Federfixierelement umfasst, das die Antriebswelle gegenüber einem Gehäusebauteil des Startermotors in einer definierten Axialposition hält. Das Federfixierelement ist vorzugsweise fest mit der Antriebswelle verbunden, die innerhalb des Startergehäuses liegt, so dass das Federfixierelement die gleiche Drehbewegung wie die Antriebswelle bzw. der Anker im Startermotor ausführt.

Das Federfixierelement legt die axiale Position der Antriebswelle im Starter- bzw. Motorgehäuse fest. Über das Federfixierelement wird eine axiale Sollposition der Antriebswelle definiert, wobei über das Federfixierelement eine rückstellende Axialkraft auf die Antriebswelle ausgeübt wird, sobald die Antriebswelle ihre Sollposition verlässt. Befindet sich dagegen die Antriebswelle in ihrer axialen Sollposition so wirkt über das Federfixierelement nur eine geringe axiale Kraft. Erst mit dem Verlassen der zulässigen axialen Position kommt die Federkraft des Federfixierelements zum Tragen.

Erfindungsgemäße wird über das Fixierelement auch in der axialen Sollposition eine axiale Federkraft auf die Antriebswelle ausgeübt.

Im Unterschied zu Ausführungen aus dem Stand der Technik treten bei einer axialen Bewegung der Antriebswelle keine Stöße auf, sondern es wird die Antriebswelle über das Federfixierelement mit einer rückstellenden Axialkraft beaufschlagt, die umso größer ist, je weiter sich die Antriebswelle axial von ihrer Sollposition entfernt. Das Federfixierelement steht Auslenkungen zumindest in einer Achsrichtung entgegen, wobei es zweckmäßig sein kann, das Federfixierelement in der Weise auszuführen, dass mit nur einem Federfixierelement eine rückstellende Axialkraft bei einer Auslenkung in beide Achsrichtungen erzielt wird. Auch hierbei kommen sowohl Ausführungen in Betracht, bei denen die Antriebswelle vor dem Wirksamwerden des Federfixierelementes ein Axialspiel ausüben kann als auch Ausführungen, bei denen das Federfixierelement ohne Spiel der Antriebswelle bereits bei geringen axialen Auslenkungen wirksam wird.

Das Federfixierelement stützt die Antriebswelle mittelbar oder unmittelbar axial gegenüber dem Gehäuse ab. Möglich ist es beispielsweise, dass das Federfixierelement sich an einem Lagerbauteil abstützt, welches gehäusefest angeordnet ist und in welchem die Antriebswelle drehbar gelagert ist. Das Lagerbauteil ist vorzugsweise als ein Gleitlager ausgebildet, beispielsweise als eine Lagerbuchse, wobei sich das Federfixierelement an der Stirnseite des Lagerbauteils abstützt. In einer weiteren Ausführung erfolgt die Abstützung unmittelbar an einem Gehäusebauteil, beispielsweise an einem Deckelelement des Gehäuses, oder sowohl an dem Lagerbauteil als auch unmittelbar an einem Gehäusebauteil.

Gemäß weiterer vorteilhafter Ausführung ist vorgesehen, dass das Federfixierelement ring- oder scheibenförmig ausgebildet ist, beispielsweise als eine Ringscheibe oder eine Klemmscheibe, die auf die Starterwelle aufgeschoben ist. Die Ring- bzw. Klemmscheibe übt vorteilhafterweise eine Klemmkraft auf die Antriebswelle aus und ist dadurch axial auf der Antriebswelle fixiert. Die Klemmscheibe ist beispielsweise als eine Speednut ausgebildet und weist eine oder mehrere Federlaschen bzw. -zungen auf, die am Außenmantel der Antriebswelle mit Federkraft anliegen. Die Klemmscheibe ist hierbei als Ring ausgeführt, wobei die Federlaschen die zentrale Ausnehmung in der Klemmscheibe begrenzen und bei einem axialen Aufschieben der Klemmscheibe auf die Antriebswelle geringfügig umgebogen werden, so dass die Federlaschen ihre radial nach innen gerichtete Klemmkraft entfalten können.

In der Ausführung des Federfixierelements als Ringscheibe ist diese ebenfalls mit einer zentralen Ausnehmung versehen, über die die Ringscheibe auf der Antriebswelle aufsitzt. Auch in dieser Ausführungsvariante kann das Federfixierelement eine radiale Klemmkraft auf die Mantelfläche der Antriebswelle ausüben. Um die axiale Position der Ringscheibe auf der Antriebswelle zu fixieren, kann es zweckmäßig sein, an der Mantelfläche der Antriebswelle einen Einstich oder eine Nut, welche sich in Umfangsrichtung erstreckt, vorzusehen, wobei das Federfixierelement in den Einstich bzw. die Nut einragt. Auf diese Weise ist auch bei einer nur geringen radialen oder einer fehlenden radialen Klemmkraft die axiale Position der Ringscheibe auf der Antriebswelle sicher festgelegt.

Es kann zweckmäßig sein, das scheiben- bzw. ringförmige Federfixierelement U-förmig auszubilden, so dass das Federfixierelement auch radial auf die Antriebswelle aufgeschoben werden kann.

Aufgrund der Abstützung der Antriebswelle und des Ankers in Achsrichtung über das Federfixierelement können Anker und Antriebswelle im Betrieb und auch im nicht-aktiven Betrieb sich axial nur mit dem zulässigen Spiel bewegen, welches gegebenenfalls bis auf Null reduziert werden kann. Durch den definierten Zustand des Ankers wird ein Hin- und Herpendeln des Ankers vermieden, wodurch auch der Kommutator- und Kohlebürstenverschleiß erheblich reduziert und sichergestellt werden kann, dass die geforderten Schaltzahlen für einen Start-Stopp-Betrieb erreicht werden. Des Weiteren werden Beschädigungen von unmittelbar an den Anker angrenzenden Bauteilen vermieden, beispielsweise eines Planetengetriebes oder eines Lagerdeckels. Schließlich weist der Starter mit dem Startermotor verbesserte Geräuscheigenschaften auf. Außerdem wird die Toleranzkette, ausgehend von der Magnetmitte bis zum Eisenpaket, deutlich reduziert.

Aufgrund der scheibenförmigen Ausführung in der Ausführung des Federfixierelements als Ring- bzw. Klemmscheibe wird eine optimale koaxiale Positionierung des Federfixierelements auf der Antriebswelle erreicht. Ein unrunder Lauf des mit der Antriebswelle umlaufenden Federfixierelementes, der andere Bauteile beschädigen könnte, wird dadurch vermieden.

Weitere Vorteile und zweckmäßige Ausführungen sind den weiteren Ansprüchen, der Figurenbeschreibung und den Zeichnungen zu entnehmen. Es zeigen:
- Fig. 1: einen Längsschnitt durch einen Startermotor in einem Starter für eine Brennkraftmaschine, mit einer drehbar gelagerten Welle, die benachbart zu ihrer Stirnseite axial über eine Ringscheibe fixiert ist,
- Fig. 2: der Startermotor in einer stirnseitigen Ansicht,
- Fig. 3: einen Längsschnitt durch einen Startermotor in einer Ausführungsvariante, bei der die Welle im Startermotor über eine Klemmscheibe axial fixiert ist,
- Fig. 4: eine stirnseitige Ansicht des Startermotors gemäß Fig. 3.

In den Figuren sind gleiche Bauteile mit gleichen Bezugszeichen versehen.

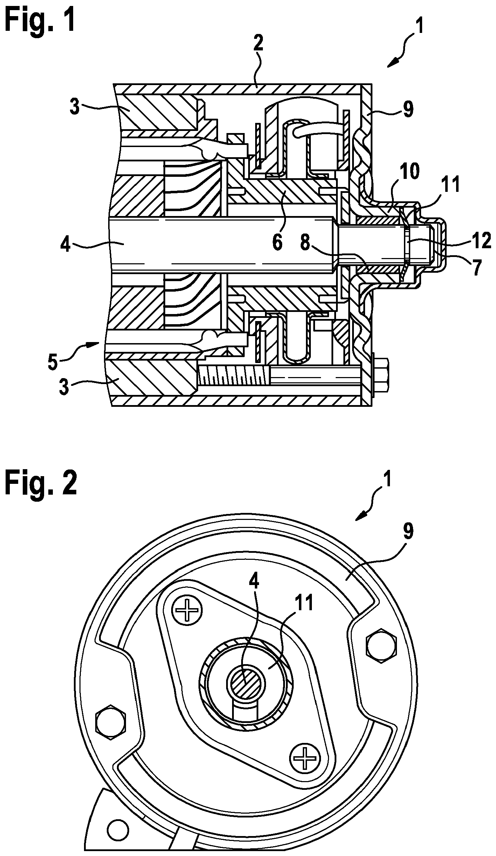

Im ersten Ausführungsbeispiel gemäß den Fig. 1 und 2 ist ein elektrischer Startermotor 1 dargestellt, der als Innenläufermotor ausgeführt ist und in einem Motor- bzw. Startergehäuse 2 mit innenseitig angeordneten Magneten oder Polschuhen 3 mit Erregerwicklung eine drehbar gelagerte Antriebs- bzw. Ankerwelle 4 aufweist. Die Antriebswelle 4 ist hier beispielsweise Träger eines nicht dargestellten Andrehritzels, das in einen kämmenden Eingriff mit einem Zahnrad an der Brennkraftmaschine zu bringen ist. Bei anderen Ausführungen treibt die Antriebswelle zunächst mittels eines Sonnenrades Planetenräder an, die mittels eines Planetenträgers ein Andrehritzel antrieben.

Auf die Antriebswelle 4 ist im Inneren des Motorgehäuses 2 ein Anker 5 aufgeschoben, der ein aus Lamellen aufgebautes Ankerpaket und eine Ankerwicklung aufweist. Die Bestromung der Ankerwicklungen erfolgt über einen Kommutator 6, der einen fest mit der Antriebswelle 4 verbundenen Kollektor und gehäuseseitige Kohlebürsten zur Stromübertragung umfasst. Der Kommutator 6 befindet sich benachbart zu einem Ende der Antriebswelle 4, welches dem Andrehritzel auf der Antriebswelle gegenüberliegt.

Zwischen dem Kommutator 6 und der Stirnseite 7 ist die Antriebswelle 4 in einer Lagerbuchse 8, die ein Gleitlager bildet, drehbar aufgenommen. Die Lagerbuchse 8 befindet sich in einem gehäuseseitigen Lagerdeckel 9, welcher zur Aufnahme der Lagerbuchse 8 mit einem zentralen Dom 10 in Zylinderform ausgebildet ist.

Zur axialen Sicherung der Antriebswelle 4 im Gehäuse 2 ist eine Ringscheibe 11 in eine Nut 12 in der Mantelfläche der Antriebswelle 4 eingesetzt und am Gehäuse abgestützt. Die Ringscheibe 11 bildet ein Federfixierelement, das die Antriebswelle 4 in einer axialen Sollposition im Gehäuse 2 sichert, wobei gegebenenfalls ein geringes axiales Spiel zulässig sein kann. Die Ringscheibe 11 ist in die umlaufende Nut 12 in der Mantelfläche der Antriebswelle 4 eingesetzt, wobei gegebenenfalls eine zusätzliche, radial nach innen gerichtete Kraft von der Ringscheibe 11 auf die Antriebswelle 4 wirkt, so dass die Ringscheibe 11 fest mit der Antriebswelle 4 verbunden ist. Die Ringscheibe 11 befindet sich unmittelbar an der Stirnseite der Lagerbuchse 8 und stützt sich an der Stirnseite des Domes 10 ab, der hier beispielsweise einteiliger Bestandteil des Lagerdeckels 9 ist. Bei einer axialen Auslenkung der Antriebswelle 4 wirkt über die Ringscheibe 11 eine axiale Rückstellkraft, welche bestrebt ist, die Antriebswelle 4 wieder in ihre axiale Sollposition zurückzustellen.

Wie der stirnseitigen Ansicht gemäß Fig. 2 zu entnehmen, ist die Klemmscheibe 11 U-förmig ausgebildet, wobei sich an die zentrale Ausnehmung in der Klemmscheibe in Radialrichtung ein offenes Segment in der Wandung anschließt. Dies erlaubt es, die Klemmscheibe 11 in Radialrichtung auf die Antriebswelle 4 aufzustecken.

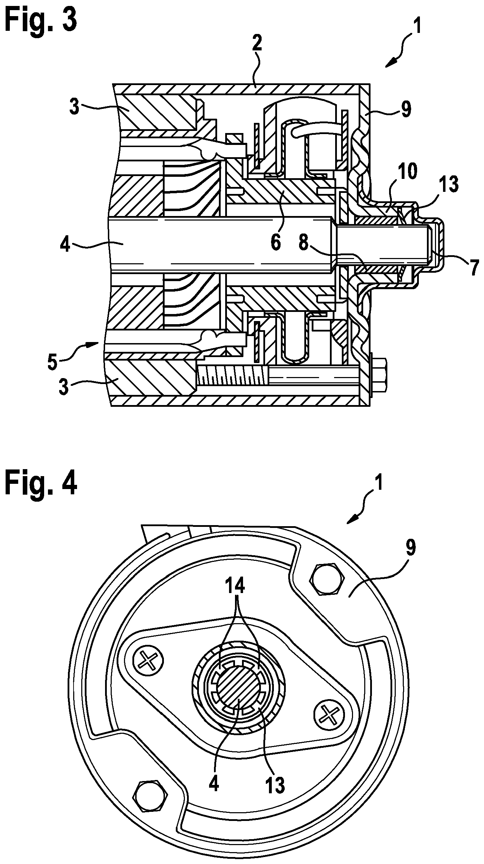

Das Ausführungsbeispiel gemäß den Fig. 3 bis 4 entspricht weitgehend demjenigen nach den Fig. 1 und 2, so dass bezüglich gleicher Bauteile und der Funktionsweise auf die obige Beschreibung verwiesen wird. Unterschiedlich ist jedoch die Ausführung des Federfixierelementes, das im Ausführungsbeispiel gemäß den Fig. 3 und 4 als eine Klemmscheibe 13 ausgeführt ist, die benachbart zur Stirnseite 7 fest auf der Antriebswelle 4 aufsitzt. Die Klemmscheibe 13 ist, wie Fig. 4 zu entnehmen, als umlaufender Ring ausgeführt, welcher axial auf die Antriebswelle 4 aufzuschieben ist. Die Klemmscheibe 13 ist als Speednut ausgebildet und weist über den Umfang verteilt eine Reihe von Federlaschen 14 auf, die radial nach innen zur zentralen Ausnehmung in der Klemmscheibe 13 gerichtet sind und beim axialen Aufschieben auf die Antriebswelle 4 eine radiale Klemmkraft auf die Antriebswelle ausüben, wodurch die axiale Position der Klemmscheibe 13 auf der Antriebswelle 4 festgelegt wird. Zugleich üben die Federlaschen 14 der Klemmscheibe 13 bei einer axialen Auslenkung der Antriebswelle 4 aus der Sollposition eine axiale Rückstellkraft auf die Antriebswelle aus.

Es ist somit ein Startermotor in einem Starter für eine Brennkraftmaschine offenbart, wobei der Startermotor 1 eine Antriebswelle 4 aufweist, die in Lagern 8 in einem Gehäuse 2 des Startermotors 1 drehbar gelagert ist, wobei eine die Antriebswelle 4 beaufschlagende Längsspielausgleichseinrichtung zur Reduzierung eines axialen Spiels vorgesehen ist, dadurch gekennzeichnet, dass die Längsspielausgleichseinrichtung ein die Antriebswelle 4 beaufschlagendes Federfixierelement 11, 13 umfasst, das die Antriebswelle 4 gegenüber einem Gehäusebauteil 9 in einer definierten Axialposition hält, wobei das Federfixierelement 11, 13 eine Kraft bewirkt, die die Antriebswelle 4 mit dem Kommutator 6 in Richtung zum Lagerdeckel 9 zieht.

Wie beim ersten Ausführungsbeispiel stützt sich der radial außen liegende Rand der Klemmscheibe 13 an der Stirnseite des Domes 10 des Lagerdeckels 9 ab.

## Patentansprüche

1. Startermotor in einem Starter für eine Brennkraftmaschine, wobei der Startermotor (1) eine Antriebswelle (4) aufweist, die in einem Lagerbauteil (8) in einem Gehäuse (2) des Startermotors (1) drehbar gelagert ist, wobei eine die Antriebswelle (4) beaufschlagende Längsspielausgleichseinrichtung zur Reduzierung eines axialen Spiels vorgesehen ist, wobei die Längsspielausgleichseinrichtung ein die Antriebswelle (4) beaufschlagendes Federfixierelement (11, 13) umfasst, das die Antriebswelle (4) gegenüber einem Lagerdeckel (9) in einer definierten Axialposition hält
wobei das Federfixierelement (11, 13) in einer axialen Sollposition der Antriebswelle (4) eine axiale Federkraft auf die Antriebswelle (4) ausübt, die die Antriebswelle (4) mit einem Kommutator (6) in Richtung zu dem Lagerdeckel (9), in dem sich das Lagerbauteil (8) befindet, zieht,
**dadurch gekennzeichnet, dass** das Federfixierelement (11) wellenseitig in einer Nut (12) am Außenmantel der Antriebswelle (4) abgestützt ist und/oder, dass das Federfixierelement (13) mindestens eine Federlasche (14) aufweist, die am Außenmantel der Antriebswelle (4) mit Federkraft anliegt.

2. Startermotor nach Anspruch 1, **dadurch gekennzeichnet, dass** das Federfixierelement (11, 13) im Bereich eines Lagers (8) der Antriebswelle (4) angeordnet ist.

3. Startermotor nach Anspruch 2, **dadurch gekennzeichnet, dass** das Lagerbauteil als Lagerbuchse (8) ausgebildet ist und dass das Federfixierelement (11, 13) an der Stirnseite (7) der Lagerbuchse (8) angeordnet ist.

4. Startermotor nach einem der einem der vorstehenden Ansprüche, **dadurch gekennzeichnet, dass** das Federfixierelement als Ring- bzw. Klemmscheibe (11, 13) ausgeführt ist, die auf die Antriebswelle (4) aufgeschoben ist.

5. Startermotor nach einem der einem der vorstehenden Ansprüche, **dadurch gekennzeichnet, dass** das Federfixierelement (11, 13) benachbart zu einer Stirnseite (7) der Antriebswelle (4) angeordnet ist.

6. Startermotor nach einem der einem der vorstehenden Ansprüche, **dadurch gekennzeichnet, dass** das Federfixierelement (11, 13) an dem Lagerdeckel (9) abgestützt ist.

7. Startermotor nach einem der einem der vorstehenden Ansprüche, **dadurch gekennzeichnet, dass** das Federfixierelement (11, 13) an dem Lagerbauteil (8) abgestützt ist.

8. Starter für eine Brennkraftmaschine mit einem elektrischen Startermotor (1) nach einem der einem der vorstehenden Ansprüche.

## Claims

1. Starter motor in a starter for an internal combustion engine, wherein the starter motor (1) has a drive shaft (4) which is rotatably mounted in a bearing component (8) in a housing (2) of the starter motor (1), wherein a longitudinal play compensation device acting on the drive shaft (4) is provided for reducing an axial play, wherein the longitudinal play compensation device comprises a spring fixing element (11, 13) acting on the drive shaft (4) and holding the drive shaft (4) in a defined axial position relative to a bearing cover (9),
wherein the spring fixing element (11, 13) exerting an axial spring force onto the drive shaft (4) in an axial set position of the drive shaft (4), said force pulling the drive shaft (4) with a commutator (6) in the direction of the bearing cover (9) in which the bearing component (8) is located,
**characterized in that** the spring fixing element (11) is supported on the shaft side in a groove (12) on the outer casing of the drive shaft (4) and/or **in that** the spring fixing element (13) has at least one spring tab (14) which abuts on the outer casing of the drive shaft (4) with spring force.

2. Starter motor according to claim 1, **characterized in that** the spring fixing element (11, 13) is arranged in the region of a bearing (8) of the drive shaft (4).

3. Starter motor according to claim 2, **characterized in that** the bearing component is formed as a bearing bush (8) and that the spring fixing element (11, 13) is arranged on the end face (7) of the bearing bush (8).

4. Starter motor according to any one of the preceding claims, **characterized in that** the spring fixing element is formed as a ring or locking disc (11, 13) which is slid onto the drive shaft (4).

5. Starter motor according to any one of the preceding claims, **characterized in that** the spring fixing member (11, 13) is disposed adjacent to an end face (7) of the drive shaft (4).

6. Starter motor according to any one of the preceding claims, **characterized in that** the spring fixing element (11, 13) is supported on the bearing cover (9).

7. Starter motor according to any one of the preceding claims, **characterized in that** the spring fixing element (11, 13) is supported on the bearing component (8).

8. Starter for an internal combustion engine comprising an electrical starter motor (1) according to any one of the preceding claims.

## Revendications

1. Moteur de démarreur dans un démarreur pour un moteur à combustion interne, dans lequel le moteur de démarreur (1) comporte un arbre d'entraînement (4) qui est monté de manière à pouvoir tourner dans un composant de palier (8) dans un carter (2) du moteur de démarreur (1), dans lequel est prévu un dispositif de compensation de jeu longitudinal rappelant l'arbre d'entraînement (4) afin de réduire un jeu axial, dans lequel le dispositif de compensation de jeu longitudinal comprend un élément de fixation à ressort (11, 13) rappelant l'arbre d'entraînement (4), lequel élément de fixation à ressort maintient l'arbre d'entraînement (4) dans une position axiale définie par rapport à un chapeau de palier (9),
dans lequel l'élément de fixation à ressort (11, 13) exerce, dans une position de consigne axiale de l'arbre d'entraînement (4), une force élastique axiale sur l'arbre d'entraînement (4) qui tire l'arbre d'entraînement (4) avec un collecteur (6) en direction du chapeau de palier (9) dans lequel se trouve le composant de palier (8),
**caractérisé en ce que** l'élément de fixation à ressort (11) est supporté, côté arbre, dans une gorge (12) par la surface extérieure de l'arbre d'entraînement (4) et/ou **en ce que** l'élément de fixation à ressort (13) comporte au moins une languette élastique (14) qui s'applique avec une force élastique contre l'enveloppe extérieure de l'arbre d'entraînement (4).

2. Moteur de démarreur selon la revendication 1, **caractérisé en ce que** l'élément de fixation à ressort (11, 13) est agencé dans la zone d'un palier (8) de l'arbre d'entraînement (4).

3. Moteur de démarreur selon la revendication 2, **caractérisé en ce que** le composant de palier est configuré comme une douille de palier (8) et **en ce que** l'élément de fixation à ressort (11, 13) est agencé sur la face frontale (7) de la douille de palier (8).

4. Moteur de démarreur selon l'une des revendications précédentes, **caractérisé en ce que** l'élément de fixation à ressort est configuré comme une rondelle annulaire ou de serrage (11, 13) qui est poussée sur l'arbre d'entraînement (4).

5. Moteur de démarreur selon l'une des revendications précédentes, **caractérisé en ce que** l'élément de fixation à ressort (11, 13) est agencé adjacent à une face frontale (7) de l'arbre d'entraînement (4).

6. Moteur de générateur selon l'une des revendications précédentes, **caractérisé en ce que** l'élément de fixation à ressort (11, 13) est supporté par le chapeau de palier (9).

7. Moteur de démarreur selon l'une des revendications précédentes, **caractérisé en ce que** l'élément de fixation à ressort (11, 13) est supporté par le composant de palier (8).

8. Démarreur pour un moteur à combustion interne avec un moteur de démarreur électrique (1) selon l'une des revendications précédentes.
